# EUROPEAN PATENT SPECIFICATION

(11) **EP 3 282 229 B1**
(45) Date of publication and mention of the grant of the patent: **10.04.2024**
(21) Application number: 17185411.0
(22) Date of filing: 08.08.2017
(51) Int. Cl.: G01C 21/36

(54) **SYSTEM AND METHOD FOR GENERATING AN ACOUSTIC SIGNAL FOR LOCALIZATION OF A POINT OF INTEREST**
SYSTEM UND VERFAHREN ZUR ERZEUGUNG EINES AKUSTISCHEN SIGNALS ZUR LOKALISIERUNG EINES PUNKTES VON INTERESSE
SYSTÈME ET PROCÉDÉ DE PRODUCTION D'UN SIGNAL ACOUSTIQUE POUR LA LOCALISATION D'UN POINT D'INTÉRÊT

(30) Priority: 12.08.2016 US 201615235525
(43) Date of publication of application: 14.02.2018
(73) Proprietor: BlackBerry Limited, Waterloo, Ontario N2K 0A7 (CA)
(72) Inventor: HETHERINGTON, Phillip Alan, Burnaby, British Columbia V5A 4W2 (CA); LAYTON, Leonard Charles, Burnaby, British Columbia V5A 4W2 (CA)
(74) Representative: Vigand, Philippe

(56) References cited:
- JP-A- 2003 156 352
- US-A1- 2013 158 856

## Description

### BACKGROUND

### 1. Technical Field

The present disclosure relates to the field of processing audio signals. In particular, to a system and method for generating an acoustic signal for localization of a point of interest.

### 2. Related Art

Navigation systems may be utilized in an automotive vehicle to direct and/or inform a user. When driving a car, points of interests may appear on a navigation screen associated with the navigation system. Some of the points of interest may be relevant or irrelevant depending on the current situation. For example, a gas station may be a point of interest within the navigation system, but the gas station may not be relevant to the user if the gas tank is full, a rest stop has just been visited, and/or the engine/transmission/tire status is normal. If, however, the gas tank is currently low, a gas station point of interest becomes very relevant. Typically the user is required to look at the navigation screen to determine the nearest gas station. Looking at the navigation screen is a distraction and should be minimized if possible. For example, US2013/0158856 A1 describes a navigational system which generates audio cues that arc perceived in a three-dimensional space, allowing users to aurally perceive the locations of mapped objects such as landmarks. The audio cues can be produced alone, or in some applications, produced in conjunction with a visual navigational map display to improve the overall efficacy of the system. The audio navigation system includes a positioning system to determine the location of a user, a memory to store hierarchically-organized information about one or more objects, and a processor to render an audio signal based on the hierarchically-organized information. The audio signal is rendered into an audio space corresponding to the user, so as to allow user perception of the location of at least one of the objects relative to the location of the user. The objects may be landmarks in the vicinity of the user.

JP2003156352 describes a navigator. A plurality of speakers installed in a car room output a sound (sound icon), corresponding to a target to make the target recognizable by a driver. The sound icon is fed to each speaker with a level and a delay time both controlled, as if the sound were emanating from the target or its vicinity.

Echo is added to the sound icon according to the distance from the target.

There is a need for a navigation system that provides feedback that reduces distractions and the present invention is defined in the appended claims.

### BRIEF DESCRIPTION OF DRAWINGS

The system and method may be better understood with reference to the following drawings and description. The components in the figures are not necessarily to scale, emphasis instead being placed upon illustrating the principles of the disclosure. Moreover, in the figures, like referenced numerals designate corresponding parts throughout the different views.

Other systems, methods, features and advantages will be, or will become, apparent to one with skill in the art upon examination of the following figures and detailed description. It is intended that all such additional systems, methods, features and advantages be included with this description and be protected by the following claims.
Fig. 1 is a schematic representation of an overhead view of an automobile in which a system for generating an acoustic signal for localization of a point of interest may be used.
Fig. 2 is a schematic representation of a system for generating an acoustic signal for localization of a point of interest.
Fig. 3 is a representation of a method for generating an acoustic signal for localization of a point of interest.
Fig. 4 is a further schematic representation of a system for generating an acoustic signal for localization of a point of interest.

### DETAILED DESCRIPTION

A method for generating an acoustic signal for localization of a point of interest is provided in appended claim 1.

Navigation systems may be utilized in an automotive vehicle to direct and/or inform a user. When driving a car, points of interests (POIs) may appear on a navigation screen associated with the navigation system. Some of the points of interest may be relevant or irrelevant depending on the current situation. For example, a gas station may be a point of interest within the navigation system, but the gas station may not be relevant to the user if the gas tank is full, a rest stop has just been visited, and/or the engine/transmission/tire status is normal. If, however, the gas tank is currently low, a gas station point of interest becomes very relevant. Typically the user is required to look at the navigation screen to determine the nearest gas station. Looking at the navigation screen may be a distraction and should be minimized if possible.

Navigation systems may produce one or more audio waveforms to inform the driver of POIs. The audio waveforms may inform the driver of the type of POI and the approximate location of the POI utilizing sounds that may be associated with the POI. For example, a gas station may be associated with two bell sounds in quick succession. In another example, the POIS may be identified by a specific sound logo, whether chosen by the company represented by the POI (e.g. sound mark), the driver, or the car manufacturer. The specific sound logo, or sound logo, may be associated with advertising information for the company represented by the POI.

According to the invention, the audio waveform is processed, or spatialized to indicate the direction or orientation of the POI with respect to the car. The processing includes panning and fading the audio waveform. The spatialization may be allocentric where, for example, an audio waveform heard on the right of the driver, then the driver turns to the right, now the logo is heard in front. Additionally, a loudness, pitch, reverberation or any other characteristic of sound that varies with distance may be applied to or manipulated to convey the distance to the POI. Conveying to the driver direction and distance via an intuitive acoustic mechanism is safer than having the driver continue to look at a screen.

Further improvements to reducing driver distraction are possible when the navigation system is contextually aware. For example, the navigation system may generate sound overload for the driver if all POIS were acoustically presented equally. System awareness of the driver's state (have they just eaten, have they just visited three furniture showrooms, diner preference, presence of kids in the car...) and the vehicle's state (does the car require fuel, are the tires running low.) is used to mute certain POIS and/or enhance certain POI sound logos over others, thereby reducing the false-positives and resulting annoyance factors. For example, if the driver has a preferred gas station then only the preferred station's sound logo may be presented acoustically when low on gas. However, if critically low on gas then all gas station sound logos may be presented. Contextually aware decision logic may be used to determine and/or select which POI audio waveform is played responsive to where the vehicle had been. For example, if the car has recently filled up at a gas station then why show or generate an audio waveform associated with a gas station POI until the car contains a lower level of fuel. In another example, if the car has recently been stopped for a period of time at a restaurant, then why show or generate an audio waveform associated restaurant POIs. The audio waveforms are muted or played softly in these cases, making the system far more relevant.

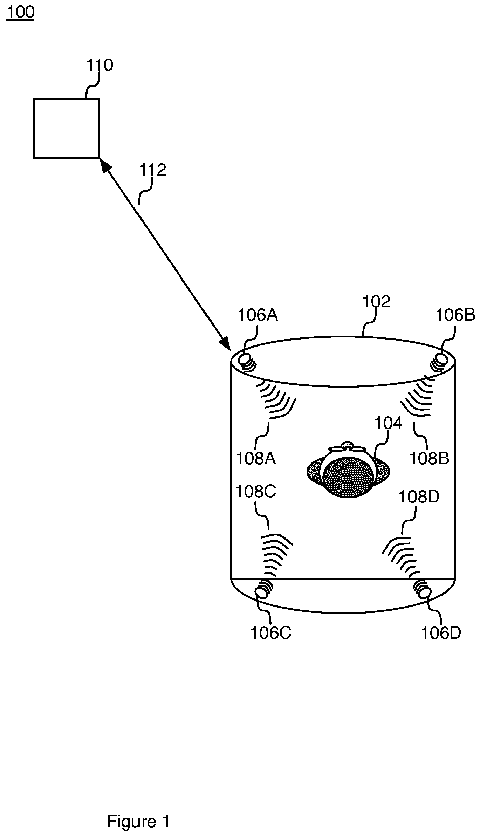

Figure 1 is a schematic representation of an overhead view of an automobile in which a system for generating an acoustic signal for localization of a point of interest may be used. The system 100 is an example system for generating an acoustic signal for localization of a point of interest. The example system configuration includes automobile 102 (partially illustrated), or vehicle, may include multiple audio transducers (e.g. audio speakers) 106A, 106B, 106C and 106D (collectively or generically audio transducers 106) and may be occupied and/or operated by a driver, or user 104. A point of interest 110, may be located a distance 112 relative to the automobile 102. Each of the automobile 102 and the point of interest 108 may be a stationary object or a moving object. One or more of the audio transducers 106 may emit an audio waveform associated with the point of interest 110. The audio waveform may be produced in two or more audio transducers 106 where the user 104 inside the automobile 102 perceives the produced acoustic signals 108A, 108B, 108C and 108D (collectively or generically produced acoustic signals 108) to be spatially indicative of the point of interest 110 relative to the vehicle 102. The audio waveform may be modified utilizing panning, fading and/or through the addition of reverberation components so that the user 104 may perceive audio waveform to be associated with the approximate location of the point of interest 110. The produced audio signal 108 may be a component of, or mixed with, an other audio signal (not illustrated) such as, for example, broadcast radio content, music, a handsfree telephone conversation, active noise cancelation and/or engine sound enhancement that may be emitted by audio transducers 106.

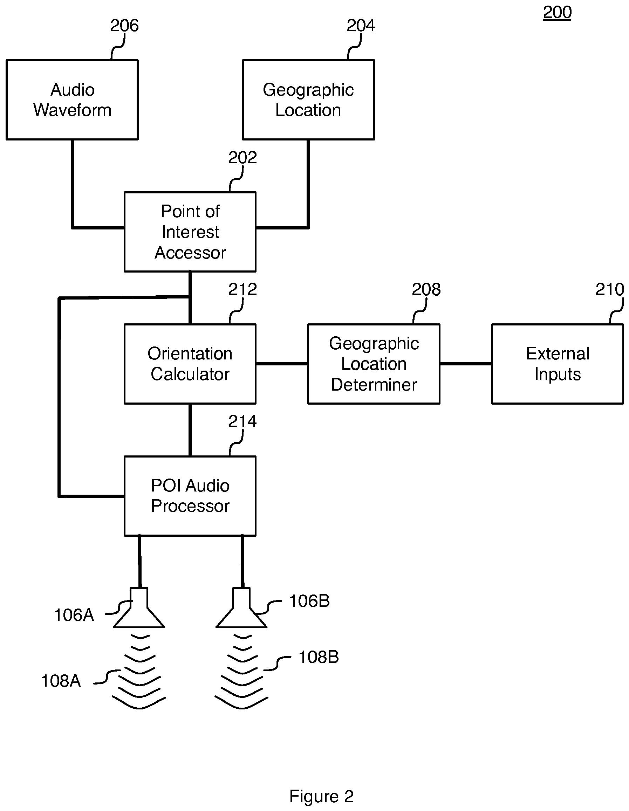

Figure 2 is a schematic representation of a system for generating an acoustic signal for localization of a point of interest. The system 200 is an example system for generating an acoustic signal for localization of a point of interest. The example system configuration includes a point of interest accessor 202, one or more geographic locations 204, one or more audio waveforms 206, a geographic location determiner 208, one or more external inputs 210, an orientation calculator 212, an audio processor 214, two or more audio transducers 106 and one or more reproduced audio waveforms 108. The point of interest accessor 202 references the one or more geographic locations 204 and the one or more audio waveforms 206 associated with each of one or more points of interest. The one or more points of interest may be associated with, for example, a navigation system in the automobile 104 indicating locations including, for example, gas stations, hospitals, grocery stores and other landmarks. The one or more geographic locations 204 and the one or more audio waveforms 206 may be stored in the same location as the associated points of interest or in a different location accessed through a communications network including, for example, the Internet. The one or more geographic locations 204 associated with one or more points of interests may comprise, for example, one or more geographic position system (GPS) coordinates associated with one or more points of interest. The one or more audio waveforms 206 associated with one or more points of interest may comprise, for example, a pre-recorded audio waveform and/or a synthesized audio waveform. The one or more audio waveforms 206 may comprise a sound logo associated with each of the one or more points of interest. The sound logo may be a sound associated with, for example, an advertisement associated with each of the one or more points of interest. An audio waveform 206 associated with a particular point of interest may be unique to the particular point of interest or may alternatively be unique to a set of multiple points of interest (including the particular point of interest) such as, for example, multiple locations of a franchised chain or multiple points of interest having a common classification (e.g. all hospitals).

The geographic location determiner 206 may locate the current geographic position of the automobile 104. The geographic location determiner 206 may receive external inputs 210. The external inputs may comprise for example, GPS coordinates from a GPS receiver and/or modified GPS coordinate calculated from additional automobile 104 sensors including gyroscope, wheel rotations, etc. The orientation calculator 212 utilizes the geographic position of the automobile 104 and the geographic position of the one or more points of interest to calculate the orientation of the one or more points of interest relative to the automobile 104. The orientation calculator 212 may utilize the orientation of the automobile 104 and assume that the automobile occupants face the forward driving direction or the automobile 104. The orientation calculator 212 calculations may include a 360-degree orientation of the one or more points of interest in two dimension (2D) and the distance between the automobile 104 and the one or more points of interest. Alternatively or in addition the geographic location determiner 208 and the orientation calculator 212 may receive and process external inputs including elevation information and may calculate the orientation and the distance to the one or more points of interest in three dimensions (3D). The orientation and the distance may be determined and represented relative to the location and orientation of the automobile 104. Orientation of the automobile 104 may be derived from time sequence analysis of a series of determined location of the automobile 104 over time and/or other external inputs including, for example, a compass bearing.

The POI audio processor 214 modifies the received one or more audio waveforms 206 responsive to the output of the orientation calculator 212. The one or more audio waveforms 206 may be processed, or spatialized, to indicate the direction of the POI with respect to the automobile 104. The direction of the POI with respect to the automobile 104 may be represent in 2D or alternatively in 3D. The processing may include, for example, panning and fading the audio waveform. The processing may be allocentric as described above. Additional processing may occur including, for example, modification of the loudness, pitch, adding reverberation components or any other characteristic of sound that varies with distance may be applied to or manipulated to convey the distance to the point of interest. The processed one or more audio waveforms 206 are output by the POI audio processor 214 and emitted by the two or more audio transducers 106. Conveying to the driver direction and distance via an intuitive acoustic mechanism may be safer than having the driver continue to look at the navigation screen.

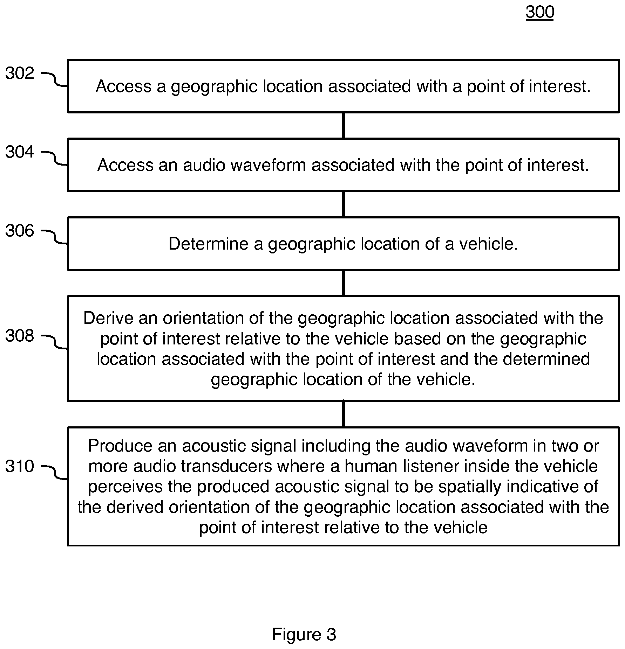

Figure 3 is a representation of a method for generating an acoustic signal for localization of a point of interest. The method 300 may be, for example, implemented using any of the systems 100, 200 and 400 described herein with reference to Figures 1 , 2 and 4. The method 300 includes the following acts. Accessing a geographic location associated with a point of interest 302. Selecting an audio waveform associated with the point of interest 304. Determining a geographic location of a vehicle 306. Deriving an orientation of the geographic location associated with the point of interest relative to the vehicle based on the geographic location associated with the point of interest and the determined geographic location of the vehicle 308. Producing an acoustic signal including the audio waveform in two or more audio transducers where a human listener inside the vehicle perceives the produced acoustic signal to be spatially indicative of the derived orientation of the geographic location associated with the point of interest relative to the vehicle 310.

Each of the steps 302, 304, 306, 308 and 310 may be repeated (individually or collectively) on a periodic and/or asynchronous basis in response to any of the passage of time, receiving revised or updated external inputs and receiving additional external inputs. The repeating of the above described steps allows the perceived spatial indication of the orientation of the geographic location of the point of interest to change (e.g be updated) in response to movement over time of the vehicle relative to the point of interest.

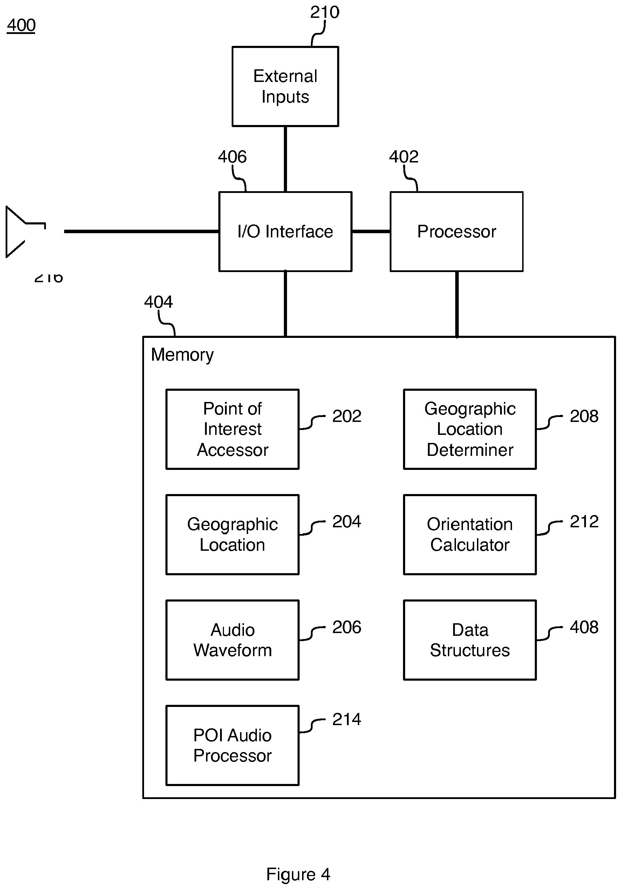

Figure 4 is a further schematic representation of a system for generating an acoustic signal for localization of a point of interest. The system 400 comprises a processor 402, memory 404 (the contents of which are accessible by the processor 402) and an input/output (I/O) interface 406. The memory 404 stores instructions which when executed using the process 402 cause the system 400 to render the functionality associated with generating an acoustic signal for localization of a point of interest as described herein. For example, the memory 404 may store instructions which when executed using the processor 402 may cause the system 400 to render the functionality associated with the point of interest accessor 202, the geographic location determiner 208, the orientation calculator 212 and the POI audio processor 214 as described herein. In addition, data structures, temporary variables and other information may be stored in data structures 408.

The processor 402 may comprise a single processor or multiple processors that may be disposed on a single chip, on multiple devices or distributed over more than one system. The processor 402 may be hardware that executes computer executable instructions or computer code embodied in the memory 404 or in other memory to perform one or more features of the system. The processor 402 may include a general purpose processor, a central processing unit (CPU), a graphics processing unit (GPU), an application specific integrated circuit (ASIC), a digital signal processor (DSP), a field programmable gate array (FPGA), a digital circuit, an analog circuit, a microcontroller, any other type of processor, or any combination thereof.

The memory 404 may comprise a device for storing and retrieving data, processor executable instructions, or any combination thereof. The memory 404 may include non-volatile and/or volatile memory, such as a random access memory (RAM), a read-only memory (ROM), an erasable programmable read-only memory (EPROM), or a flash memory. The memory 404 may comprise a single device or multiple devices that may be disposed on one or more dedicated memory devices or on a processor or other similar device. Alternatively or in addition, the memory 404 may include an optical, magnetic (hard-drive) or any other form of data storage device.

The memory 404 may store computer code, such as the point of interest accessor 202, the geographic location determiner 208, the orientation calculator 212 and the POI audio processor 214 as described herein. The computer code may include instructions executable with the processor 402. The computer code may be written in any computer language, such as C, C++, assembly language, channel program code, and/or any combination of computer languages. The memory 404 may store information in data structures including, for example, the one or more audio waveforms 206, the one or more geographic locations 204 and information representative one or more parameters of the POI audio processor 214.

The I/O interface 406 may be used to connect devices such as, for example, the audio transducers 106, the external inputs 210 and to other components of the system 400.

The system 400 may include more, fewer, or different components than illustrated in Figure 4. Furthermore, each one of the components of system 400 may include more, fewer, or different elements than is illustrated in Figure 4. Flags, data, databases, tables, entities, and other data structures may be separately stored and managed, may be incorporated into a single memory or database, may be distributed, or may be logically and physically organized in many different ways. The components may operate independently or be part of a same program or hardware. The components may be resident on separate hardware, such as separate removable circuit boards, or share common hardware, such as a same memory and processor for implementing instructions from the memory. Programs may be parts of a single program, separate programs, or distributed across several memories and processors.

The functions, acts or tasks illustrated in the figures or described may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing, distributed processing, and/or any other type of processing. In one embodiment, the instructions are stored on a removable media device for reading by local or remote systems. In other embodiments, the logic or instructions are stored in a remote location for transfer through a computer network or over telephone lines. In yet other embodiments, the logic or instructions may be stored within a given computer such as, for example, a CPU.

While various embodiments of the system and method for generating an acoustic signal for localization of a point of interest, it will be apparent to those of ordinary skill in the art that many more embodiments and implementations are possible within the scope of the present claims. Accordingly, the invention is not to be restricted except in light of the attached claims.

## Claims

1. A method for generating an acoustic signal for localization of a point of interest comprising :
accessing a geographic location associated with a point of interest (302);
selecting an audio waveform associated with the point of interest (304);
determining a geographic location of a vehicle (306);
deriving an orientation of the geographic location associated with the point of interest relative to the vehicle based on the geographic location associated with the point of interest and the determined geographic location of the vehicle (308); and
producing an acoustic signal including the audio waveform in two or more audio transducers by panning and fading the audio waveform such that a human listener inside the vehicle perceives the produced acoustic signal to be spatially indicative of the derived orientation of the geographic location associated with the point of interest relative to the vehicle (310);
**characterized by** determining whether to mute, play softly or enhance the selected audio waveform associated with the point of interest based on a state of the driver and/or a state of the vehicle.

2. The method for generating an acoustic signal for localization of a point of interest of claim 1, where the geographic location of the vehicle is associated with one or more global positioning system coordinates.

3. The method for generating an acoustic signal for localization of a point of interest of any of claims 1 to 2, where the audio waveform comprises any one or more of: a prerecorded audio waveform and a synthesized audio waveform.

4. The method for generating an acoustic signal for localization of a point of interest of any of claims 1 to 3, where the audio waveform associated with the point of interest comprises a sound logo.

5. The method for generating an acoustic signal for localization of a point of interest of any of claims 1 to 4, where the derived orientation includes one or more indicators of a bearing, a direction, a distance and an evaluation.

6. The method for generating an acoustic signal for localization of a point of interest of any of claims 1 to 5, where the produced acoustic signal is allocentric.

7. The method for generating an acoustic signal for localization of a point of interest of any of claims 1 to 6, where producing an acoustic signal including the audio waveform further includes modifying one or more of:a loudness level, a pitch level and a reverberation level.

8. The method for generating an acoustic signal for localization of a point of interest of any of claims 1 to 7, where producing an acoustic signal includes processing the acoustic signal responsive to changes over time of the orientation of the vehicle relative to the points of interest.

9. The method of claim 1, wherein the state of the driver comprises driver preferences.

10. The method of claim 1, wherein the context-sensitive information comprises a history of geographic locations where the vehicle has been.

11. A computer readable medium comprising executable instructions for implementing the method for performing the method of any of claims 1 to 10.

12. A system for generating an acoustic signal for localization of a point of interest comprising :
a processor (402); two or more audio transducers coupled to the processor; and a memory (404) coupled to the processor (402) containing instructions, executable by the processor (402), for performing the method of any of claims 1 to 10.

## Patentansprüche

1. Verfahren zum Erzeugen eines akustischen Signals zur Lokalisierung eines Interessenpunktes, das Folgendes umfasst:
Zugreifen auf einen geografischen Standort, der mit einem Interessenpunkt verknüpft ist (302);
Auswählen einer Audiowellenform, die mit dem Interessenpunkt verknüpft ist (304);
Bestimmen eines geografischen Standorts eines Fahrzeugs (306);
Ableiten einer Ausrichtung des geografischen Standorts, der mit dem Interessenpunkt verknüpft ist, relativ zum Fahrzeug auf Basis des geografischen Standorts, der mit dem Interessenpunkt verknüpft ist, und des bestimmten geografischen Standorts des Fahrzeugs (308); und
Produzieren eines akustischen Signals, das die Audiowellenform beinhaltet, in zwei oder mehr Audiowandlern durch Panning und Fading der Audiowellenform, derart, dass ein menschlicher Hörer im Fahrzeug das produzierte akustische Signal als die abgeleitete Ausrichtung des geografischen Standorts, der mit dem Interessenpunkt verknüpft ist, relativ zum Fahrzeug räumlich anzeigend wahrnimmt (310);
**gekennzeichnet durch** Bestimmen auf Basis eines Zustands des Fahrers und/oder eines Zustands des Fahrzeugs, ob die ausgewählte Audiowellenform, die mit dem Interessenpunkt verknüpft ist, stummzuschalten, leise wiedergegeben oder zu verbessern ist.

2. Verfahren zum Erzeugen eines akustischen Signals zur Lokalisierung eines Interessenpunktes nach Anspruch 1, wo der geografische Standort des Fahrzeugs mit einer oder mehreren Koordinaten eines globalen Positionsbestimmungssystems verknüpft ist.

3. Verfahren zum Erzeugen eines akustischen Signals zur Lokalisierung eines Interessenpunktes nach einem der Ansprüche 1 bis 2, wo die Audiowellenform eines oder mehreres von Folgendem umfasst: eine vorab aufgezeichnete Audiowellenform und eine synthetisierte Audiowellenform.

4. Verfahren zum Erzeugen eines akustischen Signals zur Lokalisierung eines Interessenpunktes nach einem der Ansprüche 1 bis 3, wo die mit dem Interessenpunkt verknüpfte Audiowellenform ein Klanglogo umfasst.

5. Verfahren zum Erzeugen eines akustischen Signals zur Lokalisierung eines Interessenpunktes nach einem der Ansprüche 1 bis 4, wo die abgeleitete Ausrichtung einen oder mehrere Indikatoren einer Peilung, einer Richtung, eines Abstands und einer Beurteilung beinhaltet.

6. Verfahren zum Erzeugen eines akustischen Signals zur Lokalisierung eines Interessenpunktes nach einem der Ansprüche 1 bis 5, wo das produzierte akustische Signal allozentrisch ist.

7. Verfahren zum Erzeugen eines akustischen Signals zur Lokalisierung eines Interessenpunktes nach einem der Ansprüche 1 bis 6, wo das Produzieren eines akustischen Signals, das die Audiowellenform beinhaltet, ferner das Modifizieren von einem oder mehreren von Folgendem beinhaltet: einem Lautstärkepegel, einem Tonhöhenpegel und einem Nachhallpegel.

8. Verfahren zum Erzeugen eines akustischen Signals zur Lokalisierung eines Interessenpunktes nach einem der Ansprüche 1 bis 7, wo das Produzieren eines akustischen Signals das Verarbeiten des akustischen Signals in Reaktion auf Änderungen der Ausrichtung des Fahrzeugs relativ zu den Interessenpunkten über die Zeit beinhaltet.

9. Verfahren nach Anspruch 1, wobei der Zustand des Fahrers Fahrerpräferenzen umfasst.

10. Verfahren nach Anspruch 1, wobei die kontextsensitiven Informationen eine Historie von geografischen Standorten umfassen, an denen das Fahrzeug gewesen ist.

11. Computerlesbares Medium, das ausführbare Anweisungen zum Implementieren des Verfahrens zum Durchführen des Verfahrens nach einem der Ansprüche 1 bis 10 umfasst.

12. System zum Erzeugen eines akustischen Signals zur Lokalisierung eines Interessenpunktes, das Folgendes umfasst:
einen Prozessor (402); zwei oder mehr Audiowandler, die an den Prozessor gekoppelt sind; und einen Speicher (404) der an den Prozessor (402) gekoppelt ist und Anweisungen enthält, die vom Prozessor (402) zum Durchführen des Verfahrens nach einem der Ansprüche 1 bis 10 ausführbar sind.

## Revendications

1. Procédé de génération d'un signal acoustique pour la localisation d'un point d'intérêt comprenant :
l'accès à un emplacement géographique associé à un point d'intérêt (302) ;
la sélection d'une forme d'onde audio associée au point d'intérêt (304) ;
la détermination d'un emplacement géographique d'un véhicule (306) ;
la dérivation d'une orientation de l'emplacement géographique associé au point d'intérêt par rapport au véhicule sur la base de l'emplacement géographique associé au point d'intérêt et de l'emplacement géographique déterminé du véhicule (308) ; et
la production d'un signal acoustique comportant la forme d'onde audio dans deux transducteurs audio ou plus en effectuant un panoramique et un fondu de la forme d'onde audio de sorte qu'un auditeur humain à l'intérieur du véhicule perçoive le signal acoustique produit comme étant spatialement indicatif de l'orientation dérivée de l'emplacement géographique associé au point d'intérêt par rapport au véhicule (310) ;
**caractérisé en ce qu'**il détermine s'il faut mettre en sourdine, lire doucement ou améliorer la forme d'onde audio sélectionnée associée au point d'intérêt sur la base d'un état du conducteur et/ou d'un état du véhicule.

2. Procédé de génération d'un signal acoustique pour la localisation d'un point d'intérêt selon la revendication 1, où l'emplacement géographique du véhicule est associé à une ou plusieurs coordonnées de système mondial de positionnement.

3. Procédé de génération d'un signal acoustique pour la localisation d'un point d'intérêt selon l'une des revendications 1 et 2, où la forme d'onde audio comprend l'une quelconque ou plusieurs parmi : une forme d'onde audio préenregistrée et une forme d'onde audio synthétisée.

4. Procédé de génération d'un signal acoustique pour la localisation d'un point d'intérêt selon l'une des revendications 1 à 3, où la forme d'onde audio associée au point d'intérêt comprend un logo sonore.

5. Procédé de génération d'un signal acoustique pour la localisation d'un point d'intérêt selon l'une des revendications 1 à 4, où l'orientation dérivée comporte un ou plusieurs indicateurs parmi un relèvement, une direction, une distance et une évaluation.

6. Procédé de génération d'un signal acoustique pour la localisation d'un point d'intérêt selon l'une des revendications 1 à 5, où le signal acoustique produit est allocentrique.

7. Procédé de génération d'un signal acoustique pour la localisation d'un point d'intérêt selon l'une des revendications 1 à 6, où la production d'un signal acoustique comportant la forme d'onde audio comporte en outre la modification d'un ou plusieurs parmi : un niveau d'intensité sonore, un niveau de hauteur et un niveau de réverbération.

8. Procédé de génération d'un signal acoustique pour la localisation d'un point d'intérêt selon l'une des revendications 1 à 7, où la production d'un signal acoustique comporte le traitement du signal acoustique en réponse à des changements dans le temps de l'orientation du véhicule par rapport aux points d'intérêt.

9. Procédé selon la revendication 1, dans lequel l'état du conducteur comprend des préférences de conducteur.

10. Procédé selon la revendication 1, dans lequel les informations contextuelles comprennent un historique d'emplacements géographiques où le véhicule s'est rendu.

11. Support lisible par ordinateur comprenant des instructions exécutables pour la mise en œuvre du procédé pour réaliser le procédé de l'une des revendications 1 à 10.

12. Système de génération d'un signal acoustique pour la localisation d'un point d'intérêt comprenant :
un processeur (402) ; deux transducteurs audio ou plus couplés au processeur ; et une mémoire (404) couplée au processeur (402) contenant des instructions exécutables par le processeur (402) pour réaliser le procédé de l'une des revendications 1 à 10.
